# EUROPEAN PATENT APPLICATION

(11) **EP 4 079 870 A2**
(43) Date of publication of application: **26.10.2022**
(21) Application number: 20901252.5
(22) Date of filing: 17.12.2020
(51) Int. Cl.: C21D 8/12, C21D 1/70

(54) **ANNEALING SEPARATOR COMPOSITION FOR GRAIN-ORIENTED ELECTRICAL STEEL SHEET, GRAIN-ORIENTED ELECTRICAL STEEL SHEET, AND MANUFACTURING METHOD THEREFOR**

(30) Priority: 20.12.2019 KR 20190172474
(71) Applicant: POSCO, Pohang-si, Gyeongsangbuk-do 37859 (KR)
(72) Inventor: KWON, Min Serk, Pohang-si Gyeongsangbuk-do 37859 (KR); PARK, Chang Soo, Pohang-si Gyeongsangbuk-do 37859 (KR); CHOI, Heon-Jo, Pohang-si Gyeongsangbuk-do 37859 (KR); NO, Taeyoung, Pohang-si Gyeongsangbuk-do 37859 (KR)
(74) Representative: Zech, Stefan Markus
(86) International application number: PCT/KR2020/018617
(87) International publication number: WO 2021/125863

(57) **Abstract**

An annealing separator composition for a grain-oriented electrical steel sheet according to an exemplary embodiment of the present invention contains a composite metal oxide containing Mg and a metal M, wherein the metal M is one or more of Be, Ca, Ba, Sr, Sn, Mn, Fe, Co, Ni, Cu, and Zn.

## Description

### [Technical Field]

The present invention relates to an annealing separator composition for a grain-oriented electrical steel sheet, a grain-oriented electrical steel sheet, and a method for manufacturing the grain-oriented electrical steel sheet. More particularly, the present invention relates to an annealing separator composition for a grain-oriented electrical steel sheet that may improve insulation properties of a base coating layer and magnetic properties of a grain-oriented electrical steel sheet by adding a composite metal oxide, a grain-oriented electrical steel sheet, and a method for manufacturing the grain-oriented electrical steel sheet.

### [Background Art]

In general, a grain-oriented electrical steel sheet refers to an electrical steel sheet that contains a Si component in the steel sheet and has extremely excellent magnetic properties in a rolling direction because it has a texture in which an orientation of grains is aligned in a {100}<001> direction.

In a case of a generally known grain-oriented electrical steel sheet, an effect of reducing an iron loss and decreasing noise caused by magnetostriction has been attempted by forming an insulating layer on a Forsterite (Mg₂SiO₄)-based base coating layer and using a difference in coefficient of thermal expansion of the insulating layer to apply a tensile stress to the steel sheet, but there is a limit to satisfying a property level in an advanced grain-oriented electrical steel sheet which is recently required.

In order to minimize a power loss of the grain-oriented electrical steel sheet, it is common to form an insulating coating layer on a surface thereof, and in this case, the insulating coating layer generally needs to have high electrical insulation properties, excellent adhesion to materials, and a uniform color with no defects in appearance. In addition, in accordance with the recent strengthening of the international regulation on noise of a transformer and the fierce competition among the related industries, studies on a magnetic deformation (magnetostriction) phenomenon are demanded to reduce the noise from the insulating coating layer of the grain-oriented electrical steel sheet. Specifically, when an electric field is applied to an electrical steel sheet used as an iron core of the transformer, a flicker phenomenon is caused by repeated shrinkage and expansion, and vibration and noise are caused in the transformer due to the flicker. In the case of a generally known grain-oriented electrical steel sheet, the effect of reducing the iron loss and decreasing the noise caused by magnetostriction has been attempted by forming an insulating coating layer on a Forsterite-based base coating layer and using a difference in coefficient of thermal expansion of the insulating coating layer to apply a tensile stress to the steel sheet, but there is a limit to satisfying a property level in an advanced grain-oriented electrical steel sheet which is recently required.

### [Disclosure]

### [Technical Problem]

The present invention has been made in an effort to provide an annealing separator composition for a grain-oriented electrical steel sheet, a grain-oriented electrical steel sheet, and a method for manufacturing the grain-oriented electrical steel sheet. Specifically, the present invention relates to an annealing separator composition for a grain-oriented electrical steel sheet that may improve insulation properties of a base coating layer and magnetic properties of a grain-oriented electrical steel sheet by adding a composite metal oxide, a grain-oriented electrical steel sheet, and a method for manufacturing the grain-oriented electrical steel sheet.

### [Technical Solution]

An exemplary embodiment of the present invention provides an annealing separator composition for a grain-oriented electrical steel sheet containing a composite metal oxide containing Mg and a metal M, wherein the metal M is one or more of Be, Ca, Ba, Sr, Sn, Mn, Fe, Co, Ni, Cu, and Zn, and Mg and M are contained in the composite metal oxide in amounts of 5 to 55 parts by weight and 45 to 95 parts by weight, respectively, with respect to 100 parts by weight of the total amount of Mg and M.

The composite metal oxide may have a specific surface area of 30 to 500 m²/g and an average particle diameter of 1 to 500 nm.

The composite metal oxide may have a relative dielectric constant value of 1 to 30.

M may be one or more of Co, Ni, and Mn.

M may have an ion radius of 30 to 100 pm.

The annealing separator composition may have an average grain diameter of 10 to 900 nm after being subjected to a heat treatment at 600°C in a non-oxidizing atmosphere.

Another embodiment of the present invention provides a grain-oriented electrical steel sheet including a coating layer disposed on one or both surfaces of a grain-oriented electrical steel sheet substrate.

The coating layer may contain 1 to 20 wt% of Mg, 15 to 45% of a metal M, 15 to 50 wt% of Si, 20% or less of Fe, and a balance of O and unavoidable impurities.

The grain-oriented electrical steel sheet may further include a ceramic layer disposed on the coating layer.

A thickness of the coating layer may be 0.1 to 10 µm and a thickness of the ceramic layer may be 0.5 to 5 µm.

Yet another embodiment of the present invention provides a method for manufacturing a grain-oriented electrical steel sheet, the method including: preparing a steel slab; heating the steel slab; hot-rolling the heated steel slab to manufacture a hot-rolled sheet; cold-rolling the hot-rolled sheet to manufacture a cold-rolled sheet; performing primary recrystallization-annealing on the cold-rolled sheet; applying an annealing separator onto a surface of the primary recrystallization-annealed steel sheet; and performing secondary recrystallization-annealing on the steel sheet on which the annealing separator is applied, wherein the annealing separator contains a composite metal oxide containing Mg and a metal M, the metal M is one or more of Be, Ca, Ba, Sr, Sn, Mn, Fe, Co, Ni, Cu, and Zn, and Mg and M are contained in the composite metal oxide in amounts of 5 to 55 parts by weight and 45 to 95 parts by weight, respectively, with respect to 100 parts by weight of the total amount of Mg and M.

Yet another embodiment of the present invention provides an annealing separator composition for a grain-oriented electrical steel sheet containing: a composite metal oxide containing Mg and a metal M; and mullite, wherein the metal M is one or more of Be, Ca, Ba, Sr, Sn, Mn, Fe, Co, Ni, Cu, and Zn.

The composite metal oxide and the mullite may be contained in amounts of 10 to 90 parts by weight and 10 to 90 parts by weight, respectively, with respect to 100 parts by weight of the total amount of the composite metal oxide and the mullite.

The composite metal oxide may have a specific surface area of 30 to 500 m²/g and an average particle diameter of 1 to 500 nm, and the mullite may have a specific surface area of 5 to 350 m²/g and an average particle diameter of 1 to 300 nm.

M may be one or more of Co, Ni, and Mn.

Yet another embodiment of the present invention provides a grain-oriented electrical steel sheet including a coating layer containing mullite, the coating layer being disposed on one or both surfaces of a grain-oriented electrical steel sheet substrate.

The coating layer may contain 1 to 20 wt% of Mg, 0.5 to 10% of Al, 15 to 45% of a metal M, 15 to 50 wt% of Si, 20% or less of Fe, and a balance of O and unavoidable impurities, and may contain the mullite in an amount of 5 to 45 area%.

The grain-oriented electrical steel sheet may further include a ceramic layer formed on the coating layer.

A thickness of the coating layer may be 0.1 to 10 µm and a thickness of the ceramic layer may be 0.5 to 5 µm.

Yet another embodiment of the present invention provides a method for manufacturing a grain-oriented electrical steel sheet, the method including: preparing a steel slab; heating the steel slab; hot-rolling the heated steel slab to manufacture a hot-rolled sheet; cold-rolling the hot-rolled sheet to manufacture a cold-rolled sheet; performing primary recrystallization-annealing on the cold-rolled sheet; applying an annealing separator onto a surface of the primary recrystallization-annealed steel sheet; and performing secondary recrystallization-annealing on the steel sheet on which the annealing separator is applied, wherein the annealing separator contains: a composite metal oxide containing Mg and a metal M; and mullite.

### [Advantageous Effects]

The annealing separator according to an exemplary embodiment of the present invention may improve insulation properties of a base coating layer by adding a composite metal oxide. In addition, the annealing separator may improve magnetic properties of the grain-oriented electrical steel sheet.

The annealing separator according to an exemplary embodiment of the present invention may improve the insulation properties of the base coating layer to reduce a thickness of the ceramic layer disposed on the base coating layer, and thus, a space factor of the grain-oriented electrical steel sheet may be improved.

### [Description of the Drawings]

FIG. 1 is a schematic side cross-sectional view of a grain-oriented electrical steel sheet according to an exemplary embodiment of the present invention.

FIG. 2 is a flowchart of a method for manufacturing a grain-oriented electrical steel sheet according to an exemplary embodiment of the present invention.

### [Mode for Invention]

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present invention.

Terminologies used herein are to mention only a specific exemplary embodiment, and are not to limit the present invention. Singular forms used herein include plural forms as long as phrases do not clearly indicate an opposite meaning. The term "comprising" used in the present specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents and are not interpreted as ideal or very formal meanings unless otherwise defined.

In addition, unless otherwise stated, % means wt%, and 1 ppm is 0.0001 wt%.

In an exemplary embodiment of the present invention, the meaning of "further containing an additional element" means that the additional element is substituted for the balance by the amount of additional element added.

Hereinafter, exemplary embodiments of the present invention will be described in detail so that those skilled in the art to which the present invention pertains may easily practice the present invention. However, the present invention may be implemented in various different forms and is not limited to exemplary embodiments described herein.

### Annealing Separator A for Grain-Oriented Electrical Steel Sheet

An annealing separator composition for a grain-oriented electrical steel sheet according to an exemplary embodiment of the present invention contains a composite metal oxide containing Mg and a metal M, the metal M is one or more of Be, Ca, Ba, Sr, Sn, Mn, Fe, Co, Ni, Cu, and Zn, and Mg and M are contained in the composite metal oxide in amounts of 5 to 55 parts by weight and 45 to 95 parts by weight, respectively, with respect to 100 parts by weight of the total amount of Mg and M.

In an exemplary embodiment of the present invention, the composite metal oxide is an oxide in which Mg and the metal M are chemically bonded to each other. That is, the composite metal oxide is a compound in which a metal M is substituted for and bonded to a position of a Mg element of MgO, and is distinguished from a case where MgO and an oxide of a metal M are separately contained in the annealing separator composition. The composite metal compound may be represented by the following Chemical Formula 1:

[Chemical Formula 1] Mg_{1-X}M_{X}O

wherein X represents a relative amount of the metal M in the composite metal compound and X is 5 to 95.

In an exemplary embodiment of the present invention, the composite metal oxide is contained, such that a large amount of the metal M may be added in comparison to the case where MgO and an oxide of a metal M are separately contained in the annealing separator composition, which is advantageous in terms of forming a uniform coating layer.

In the case where MgO and a metal M oxide are separately contained in the annealing separator composition, the amount of M oxide added is limited and non-uniformity of coating layer components is caused, such that it is difficult to impart uniform properties. In addition, in a case where an excessive amount of M oxide is contained, a viscosity is increased rapidly when mixed with water, and solidification occurs over time, such that work is not easily performed, and even when the work may be performed, surface defects occur due to the non-uniformity of the coating layer components caused by the solidification. In the present exemplary embodiment, since the Mg and M metal components are uniformly distributed in the composite oxide in an atomic unit, there is a small change in viscosity over time when the composite oxide is mixed with water to prepare the annealing separator composition, such that the work may be easily performed and a significantly uniform coating layer may be formed when the annealing separator is applied onto the steel sheet. The uniformly formed coating layer may impart the same magnetic properties and surface properties in a width direction and a length direction, and is significantly aesthetic.

The composite metal oxide may have a specific surface area of 30 to 500 m²/g. When the specific surface area is too small, reactivity may be reduced, which may cause formation of a non-uniform coating layer. When the specific surface area is too large, the viscosity is increased rapidly when mixed with water and stirred, such that the work may not be easily performed. More specifically, the composite metal oxide may have a specific surface area of 50 to 300 m²/g.

An average particle diameter of the composite metal oxide may be 1 to 500 nm. When the average particle diameter is too small, the annealing separator composition may not be uniformly applied due to aggregation between the composite metal oxides. When the average particle diameter is too large, a surface roughness of the base coating layer may be rough and surface defects may occur. More specifically, the average particle diameter of the composite metal oxide may be 10 to 300 nm. In a case where the annealing separator is present in a form of a slurry containing a solvent, a specific surface area and an average particle diameter may be within the ranges described above when measured by removing the solvent at a temperature of 100°C or lower.

The composite metal oxide may have a relative dielectric constant value of 1 to 30. When the relative dielectric constant of the composite metal oxide is too low, a large amount of pores are contained in the composite oxide, which may cause deterioration of adhesion. When the relative dielectric constant of the composite metal oxide is too high, insulation properties of the base coating layer may be insufficiently improved. More specifically, the relative dielectric constant value may be 5 to 20. In this case, the relative dielectric constant may be measured under a condition of 25°C and 1 MHz.

In the composite metal oxide, Mg serves to supply Mg to the base coating layer.

In the composite metal oxide, the metal M serves to improve magnetic properties and impart insulation properties. An element having an atomic radius and an electronegativity similar to those of Mg is suitable as the metal M. Specifically, the metal M may be one or more of Be, Ca, Ba, Sr, Sn, Mn, Fe, Co, Ni, Cu, and Zn. More specifically, the metal M may be one or more of Co, Ni, and Mn.

Mg and M are contained in the composite metal oxide in amounts of 5 to 55 parts by weight and 45 to 95 parts by weight, respectively, with respect to 100 parts by weight of the total amount of Mg and M.

When the amount of the metal M contained is too small, insulation properties of a desired base coating layer may be insufficiently improved. When the amount of the metal M contained is too large, the amount of Mg is relatively small, which may cause deterioration of the adhesion. More specifically, the metal M and Mg may be contained in amounts of 60 to 80 parts by weight and 20 to 40 parts by weight, respectively.

Specifically, the metal M may have an ion radius of 30 to 100 pm.

The annealing separator composition may have an average grain diameter of 10 to 900 nm after being subjected to a heat treatment at 600°C in a non-oxidizing atmosphere. When the average grain diameter is too small, the viscosity is increased rapidly, and thus, the annealing separator composition may not be easily applied to mass production. When the average grain diameter is too large, it is difficult to form a uniform coating layer. More specifically, the annealing separator composition may have an average grain diameter of 100 to 750 nm after being subjected to a heat treatment at 600°C in a non-oxidizing atmosphere.

A method for preparing the composite metal oxide is not particularly limited. For example, the composite metal oxide may be prepared by adding a catalyst to a solution containing a Mg precursor and a precursor of a metal M and performing a calcination process. Alternatively, the composite metal oxide may be prepared by milling a mixed material into a solid state. Alternatively, the composite metal oxide may be prepared by reacting a metal alkoxide with water to form a metal-oxygen bond through hydrolysis and a condensation reaction. Alternatively, the composite metal oxide may be prepared by formation and recrystallization of metal oxide particles in a solvent by dissolving the solvent containing a metal salt while heating the solvent under a high temperature and a high pressure.

The annealing separator composition may further contain other components in addition to the composite metal oxide described above.

As an example, the annealing separator composition may further contain MgO. In an exemplary embodiment of the present invention, since Mg may be supplied through MgO in the composite metal oxide, MgO may be contained in a trace amount. MgO may be contained as an unreacted material during a process of preparing the composite metal oxide described above. Specifically, MgO may be contained in the annealing separator in an amount of 5 wt% or less, and more specifically, in an amount of 1 wt% or less, with respect to 100 wt% of a solid content.

The annealing separator composition according to an exemplary embodiment of the present invention may further contain a ceramic powder in an amount of 0.5 to 10 wt% with respect to 100 wt% of the solid content. The ceramic powder may include one or more selected from MnO, Al₂O₃, SiO₂, TiO₂, and ZrO₂. In a case where the ceramic powder is further contained in an appropriate amount, insulation properties of a coating layer to be formed may be further improved.

The annealing separator composition according to an exemplary embodiment of the present invention may further contain Sb₂(SO₄)₃, SrSO₄, BaSO₄, or a combination thereof in an amount of 1 to 10 wt% with respect to 100 wt% of the solid content. By further containing an appropriate amount of Sb₂(SO₄)₃, SrSO₄, BaSO₄, or a combination thereof, a grain-oriented electrical steel sheet having an excellent surface gloss and a significantly aesthetic roughness may be manufactured.

The annealing separator composition may further contain a solvent for uniform dispersion and easy application of solids. As the solvent, water, alcohol, or the like may be used and may be contained in an amount of 300 to 1,000 parts by weight with respect to 100 parts by weight of the solid content. As described above, the annealing separator composition may be a form of a slurry.

### Grain-Oriented Electrical Steel Sheet A

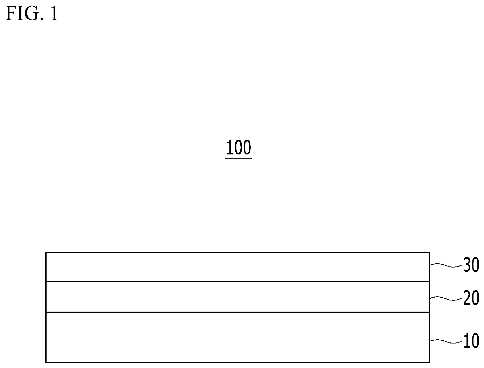

A grain-oriented electrical steel sheet 100 according to an exemplary embodiment of the present invention includes a coating layer 20 disposed on one or both surfaces of a grain-oriented electrical steel sheet substrate 10. FIG. 1 illustrates a schematic side cross-sectional view of a grain-oriented electrical steel sheet according to an exemplary embodiment of the present invention. FIG. 1 illustrates a case where the coating layer 20 is disposed on an upper surface of the grain-oriented electrical steel sheet substrate 10.

In an exemplary embodiment of the present invention, the coating layer 20 contains 1 to 20 wt% of Mg, 15 to 45% of a metal M, 15 to 50 wt% of Si, 20% or less of Fe, and a balance of O and unavoidable impurities. These properties are exhibited by containing the composite metal oxide in the annealing separator composition as described above. In a case where MgO is contained rather than a composite metal oxide, the content of the metal M described above is not satisfied, and a proper improvement of magnetic properties and insulation properties are not exhibited. Alternatively, even in a case where MgO and an oxide of a metal M are contained in the annealing separator as separate compounds rather than a composite metal oxide, there is a limit to adding the metal M, and thus, the above properties are not exhibited. Alternatively, in a case where the metal M is contained in the composite metal oxide in an excessively small amount, as in the case where MgO and an oxide of a metal M are separately added, the amount of the metal M is too small, and thus, the improvement of magnetic properties and insulation properties are not exhibited.

The coating layer may contain 1 to 20 wt% of Mg, 15 to 45% of a metal M, 15 to 50 wt% of Si, 20% or less of Fe, and a balance of O and unavoidable impurities.

Mg and M are derived from Mg and the metal M in the composite metal oxide.

When the amount of the metal M is too small, the effect of improving the insulation properties of the base coating layer due to the addition of the metal M is not properly obtained. When the amount of the metal M is too large, a manufacturing cost is increased, and sales competitiveness is lowered. In a case where the metal M is two or more elements, the content range described above means the total amount of the two or more elements. More specifically, the amount of the metal M in the coating layer 20 may be 17.5 to 35 wt%.

Si and Fe may be derived from the substrate. O may be derived from the components of the annealing separator or may be incorporated during the heat treatment process. In addition, the coating layer 20 may further contain impurity components such as carbon (C) and the like.

A thickness of the coating layer 20 may be 0.1 to 10 µm. When the thickness of the coating layer 20 is too thin, a coating layer tension imparting ability may be reduced, which may cause an increase in iron loss. When the thickness of the coating layer 20 is too thick, a space factor is reduced, which may cause deterioration of characteristics of the transformer. Therefore, the thickness of the coating layer 20 may be adjusted within the range described above. More specifically, the thickness of the coating layer 20 may be 0.8 to 6 µm.

The grain-oriented electrical steel sheet 100 according to an exemplary embodiment of the present invention may further include a ceramic layer 30 disposed on the coating layer 20. FIG. 1 illustrates an example in which the ceramic layer 30 is further formed on the coating layer 20.

A thickness of the ceramic layer 30 may be 0.5 to 5 µm. When the thickness of the ceramic layer 30 is too thin, an insulating effect of the ceramic layer 30 may be small. When the thickness of the ceramic layer 30 is too thick, adhesion of the ceramic layer 30 is reduced, and peeling may occur. Therefore, the thickness of the ceramic layer 30 may be adjusted within the range described above. More specifically, the thickness of the ceramic layer 30 may be 0.8 to 3.2 µm. In an exemplary embodiment of the present invention, since the insulation properties of the coating layer 20 are enhanced, the thickness of the ceramic layer 30 may be relatively thin.

The ceramic layer 30 may contain a ceramic powder. The ceramic powder may be one or more selected from Al₂O₃, SiO₂, TiO₂, ZrO₂, Al₂O₃·TiO₂, Y₂O₃, 9Al₂O₃·2B₂O₃, BN, CrN, BaTiO₃, SiC, and TiC. A particle diameter of the ceramic powder may be 2 to 900 nm. When the particle diameter of the ceramic powder is too small, it may be difficult to form the ceramic layer. When the particle diameter of the ceramic powder is too large, the surface roughness may be rough, which may cause surface defects. Therefore, the particle diameter of the ceramic powder may be adjusted within the range described above.

The ceramic powder may have one or more shapes selected from the group consisting of a spherical shape, a plate shape, and a needle shape.

The ceramic layer 30 may further contain a metal phosphate. The metal phosphate may include one or more selected from Mg, Ca, Ba, Sr, Zn, Al, and Mn. In the case where the metal phosphate is further contained, the insulation properties of the ceramic layer 30 may be further improved.

The metal phosphate may be composed of a compound obtained by a chemical reaction between a metal hydroxide and phosphoric acid (H₃PO₄).

The metal phosphate is composed of a compound obtained by a chemical reaction between a metal hydroxide and phosphoric acid (H₃PO₄), and the metal hydroxide may be one or more selected from the group consisting of Ca(OH)₂, Al(OH)₃, Mg(OH)₂, B(OH)₃, Co(OH)₂, and Cr(OH)₃.

Specifically, a metal atom of the metal hydroxide may be formed by a substitution reaction with phosphorous of phosphoric acid to form a single bond, a double bond, or a triple bond, and may be composed of a compound in which the amount of unreacted free phosphoric acid (H₃PO₄) is 25 wt% or less.

The metal phosphate may be composed of a compound obtained by a chemical reaction between a metal hydroxide and phosphoric acid (H₃PO₄), and a weight ratio of the metal hydroxide to the phosphoric acid may be represented by 1:100 to 40:100.

When the amount of the metal hydroxide contained is too large, the chemical reaction may not be completed, which may cause generation of precipitates, and when the amount of the metal hydroxide contained is too small, corrosion resistance may be deteriorated. Therefore, a range of the amount of the metal hydroxide may be limited as described above.

In an exemplary embodiment of the present invention, the effects of the annealing separator composition and the coating layer 20 are exhibited regardless of the components of the grain-oriented electrical steel sheet substrate 10. Supplementally, the components of the grain-oriented electrical steel sheet substrate 10 will be described as follows.

The grain-oriented electrical steel sheet substrate 10 may contain 2.8 to 4.5 wt% of silicon (Si), 0.020 to 0.040 wt% of aluminum (Al), 0.01 to 0.20 wt% of manganese (Mn), 0.01 to 0.15 wt% of antimony (Sb), tin (Sn), nickel (Ni), or a combination thereof, and a balance of Fe and other unavoidable impurities.

### Method A for Manufacturing Grain-Oriented Electrical Steel Sheet

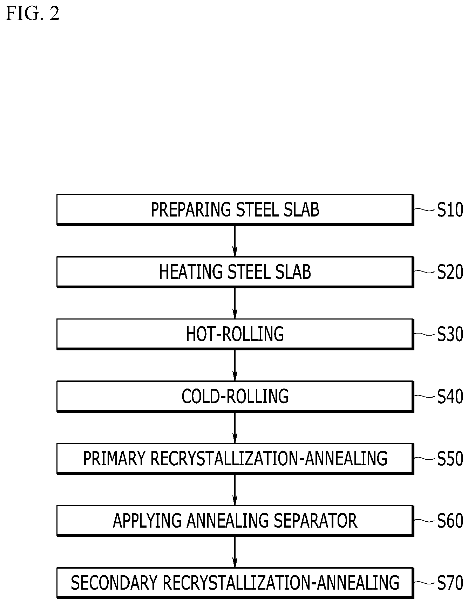

FIG. 2 schematically illustrates a flowchart of a method for manufacturing a grain-oriented electrical steel sheet according to an exemplary embodiment of the present invention. The flowchart of the method for manufacturing a grain-oriented electrical steel sheet of FIG. 2 is merely for illustrating the present invention, and the present invention is not limited thereto. Therefore, the method for manufacturing a grain-oriented electrical steel sheet may be variously modified.

As illustrated in FIG. 2, the method for manufacturing a grain-oriented electrical steel sheet includes: preparing a steel slab (S10); heating the steel slab (S20); hot-rolling the heated steel slab to manufacture a hot-rolled sheet (S30); cold-rolling the hot-rolled sheet to manufacture a cold-rolled sheet (S40); performing primary recrystallization-annealing on the cold-rolled sheet (S50); applying an annealing separator onto a surface of the primary recrystallization-annealed steel sheet (S60); and performing secondary recrystallization-annealing on the steel sheet on which the annealing separator is applied (S70). In addition, the method for manufacturing a grain-oriented electrical steel sheet may further include other steps.

First, in S10, a steel slab is prepared. Since components of the steel slab have been specifically described in the components of the grain-oriented electrical steel sheet described above, overlapping descriptions will be omitted.

Next, in S20, the steel slab is heated. At this time, the heating of the slab may be performed by a low-temperature slab method at 1,200°C or lower.

Next, in S30, the heated steel slab is hot-rolled to manufacture a hot-rolled sheet. After S30, the manufactured hot-rolled sheet may be hot-rolled annealed.

Next, in S40, the hot-rolled sheet is cold-rolled to manufacture a cold-rolled sheet. In S40, cold-rolling may be performed once or cold-rolling including intermediate annealing may be performed twice or more.

Next, in S50, primary recrystallization-annealing is performed on the cold-rolled sheet. At this time, the performing of the primary recrystallization-annealing on the cold-rolled sheet may include simultaneously performing decarburization annealing and nitrification annealing on the cold-rolled sheet, or may include performing nitrification annealing on the cold-rolled sheet after decarburization annealing.

Next, in S60, an annealing separator is applied onto a surface of the primary recrystallization-annealed steel sheet. Since the annealing separator has been specifically described, an overlapping description will be omitted.

The amount of the annealing separator applied may be 1 to 20 g/m². When the amount of the annealing separator applied is too small, the formation of the coating layer may not be performed smoothly. When the amount of the annealing separator applied is too large, it may affect the secondary recrystallization. Therefore, the amount of the annealing separator applied may be adjusted within the range described above.

Next, in S70, secondary recrystallization-annealing is performed on the steel sheet on which the annealing separator is applied. A coating layer 20 is formed during the secondary recrystallization-annealing.

In the secondary recrystallization-annealing, a primary soaking temperature may be set to 650 to 750°C, and a secondary soaking temperature may be set to 1,100 to 1,250°C. The temperature may be controlled under a condition of 15 °C/hr in a temperature section of a temperature rising section. In addition, the secondary recrystallization-annealing may be performed in a gas atmosphere that is an atmosphere containing 220 to 30 vol% of nitrogen and 70 to 80 vol% of hydrogen until a primary soaking step, and the steel sheet may be subjected to furnace cooling after being maintained in a 100% hydrogen atmosphere for 15 hours in a secondary soaking step. The coating layer 20 may be smoothly formed through the conditions described above.

The method for manufacturing a grain-oriented electrical steel sheet may further include, after S70, forming a ceramic layer 30. Since the ceramic layer 30 has been also specifically described, an overlapping description will be omitted. As a method for forming the ceramic layer 30, the ceramic layer may be formed by spraying a ceramic powder onto the coating layer 20. Specifically, a method such as plasma spray coating, high velocity oxy fuel spray coating, aerosol deposition coating, or cold spray coating may be applied. More specifically, a plasma spray coating method for forming a ceramic layer by supplying a ceramic powder to a heat source obtained by plasma-generating gas containing Ar, H₂, N₂, or He at an output of 20 to 300 kW may be used. In addition, as a plasma spray coating method, gas containing Ar, H₂, N₂, or He may be supplied in a suspension form of a mixture of a ceramic powder and a solvent to a heat source plasma-generated at an output of 20 to 300 kW to form a ceramic layer 30. In this case, the solvent may be water or alcohol.

In addition, as the method for forming the ceramic layer 30, a method for forming a ceramic layer by applying a composition for forming a ceramic layer that contains a ceramic powder and a metal phosphate may be used.

After the formation of the ceramic layer 30, magnetic domain refinement may be performed.

### Annealing Separator B for Grain-Oriented Electrical Steel Sheet

An annealing separator composition for a grain-oriented electrical steel sheet according to an exemplary embodiment of the present invention contains: a composite metal oxide containing Mg and a metal M; and mullite, wherein the metal M is one or more of Be, Ca, Ba, Sr, Sn, Mn, Fe, Co, Ni, Cu, and Zn.

In an exemplary embodiment of the present invention, the composite metal oxide is an oxide in which Mg and the metal M are chemically bonded to each other. That is, the composite metal oxide is a compound in which a metal M is substituted for and bonded to a position of a Mg element of MgO, and is distinguished from a case where MgO and an oxide of a metal M are separately contained in the annealing separator composition. The composite metal compound may be represented by the following Chemical Formula 1:

[Chemical Formula 1] Mg_{1-X}M_{X}O

wherein X represents a relative amount of the metal M in the composite metal compound and X is 45 to 95.

In an exemplary embodiment of the present invention, the composite metal oxide is contained, such that it is advantageous in terms of forming a uniform coating layer in comparison to a case where MgO and an oxide of a metal M are separately contained in the annealing separator composition.

In the case where MgO and a metal M oxide are separately contained in the annealing separator composition, the amount of M oxide added is limited and non-uniformity of coating layer components is caused, such that it is difficult to impart uniform properties. In addition, in a case where an excessive amount of M oxide is contained, a viscosity is increased rapidly when mixed with water, and solidification occurs over time, such that work is not easily performed, and even when the work may be performed, surface defects occur due to the non-uniformity of the coating layer components caused by the solidification. In the present exemplary embodiment, since the Mg and M metal components are uniformly distributed in the composite oxide in an atomic unit, there is a small change in viscosity over time when the composite oxide is mixed with water to prepare the annealing separator composition, such that the work may be easily performed and a significantly uniform coating layer may be formed when the annealing separator is applied onto the steel sheet. The uniformly formed coating layer may impart the same magnetic properties and surface properties in a width direction and a length direction, and is significantly aesthetic.

The composite metal oxide may have a specific surface area of 30 to 500 m²/g. When the specific surface area is too small, reactivity may be reduced, which may cause formation of a non-uniform coating layer. When the specific surface area is too large, the viscosity is increased rapidly when mixed with water and stirred, such that the work may not be easily performed. More specifically, the composite metal oxide may have a specific surface area of 50 to 300 m²/g.

An average particle diameter of the composite metal oxide may be 1 to 500 nm. When the average particle diameter is too small, the annealing separator composition may not be uniformly applied due to aggregation between the composite metal oxides. When the average particle diameter is too large, a surface roughness of the base coating layer may be rough and surface defects may occur. More specifically, the average particle diameter of the composite metal oxide may be 10 to 300 nm. In a case where the annealing separator is present in a form of a slurry containing a solvent, a specific surface area and an average particle diameter may be within the ranges described above when measured by removing the solvent at a temperature of 100°C or lower.

The composite metal oxide may have a relative dielectric constant value of 1 to 30. When the relative dielectric constant of the composite metal oxide is too low, a large amount of pores are contained in the composite oxide, which may cause deterioration of adhesion. When the relative dielectric constant of the composite metal oxide is too high, insulation properties of the base coating layer may be insufficiently improved. More specifically, the relative dielectric constant value may be 5 to 20. In this case, the relative dielectric constant may be measured under a condition of 25°C and 1 MHz.

In the composite metal oxide, Mg serves to supply Mg to the base coating layer.

In the composite metal oxide, the metal M serves to improve the magnetic properties and impart insulation properties. An element having an atomic radius and an electronegativity similar to those of Mg is suitable as the metal M. Specifically, the metal M may be one or more of Be, Ca, Ba, Sr, Sn, Mn, Fe, Co, Ni, Cu, and Zn. More specifically, the metal M may be one or more of Co, Ni, and Mn.

Mg and M may be contained in the composite metal oxide in amounts of 5 to 55 parts by weight and 45 to 95 parts by weight, respectively, with respect to 100 parts by weight of the total amount of Mg and M. Unlike the case described above, in an exemplary embodiment in which mullite is contained, the insulation properties of the coating layer are reinforced by the mullite, and thus, it is also possible to contain a relatively small amount of the metal M.

When the amount of the metal M contained is too small, insulation properties of a desired coating layer may be insufficiently improved. When the amount of the metal M contained is too large, the amount of Mg is relatively small, which may cause deterioration of the adhesion. More specifically, the metal M and Mg may be contained in amounts of 45 to 95 parts by weight and 5 to 55 parts by weight, respectively.

Specifically, the metal M may have an ion radius of 30 to 100 pm.

The annealing separator composition may have an average grain diameter of 10 to 900 nm after being subjected to a heat treatment at 600°C in a non-oxidizing atmosphere. When the average grain diameter is too small, the viscosity is increased rapidly, and thus, the annealing separator composition may not be easily applied to mass production. When the average grain diameter is too large, it is difficult to form a uniform coating layer. More specifically, the annealing separator composition may have an average grain diameter of 100 to 750 nm after being subjected to a heat treatment at 600°C in a non-oxidizing atmosphere.

A method for preparing the composite metal oxide is not particularly limited. For example, the composite metal oxide may be prepared by adding a catalyst to a solution containing a Mg precursor and a precursor of a metal M and performing a calcination process. Alternatively, the composite metal oxide may be prepared by milling a mixed material into a solid state. Alternatively, the composite metal oxide may be prepared by reacting a metal alkoxide with water to form a metal-oxygen bond through hydrolysis and a condensation reaction. Alternatively, the composite metal oxide may be prepared by formation and recrystallization of metal oxide particles in a solvent by dissolving the solvent containing a metal salt while heating the solvent under a high temperature and a high pressure.

The composite metal oxide and the mullite may be contained in amounts of 10 to 90 parts by weight and 10 to 90 parts by weight, respectively, with respect to 100 parts by weight of the total amount of the composite metal oxide and the mullite. When the amount of the composite metal oxide contained is too small, the amount of Mg of the composite metal oxide is small, which may cause deterioration of the adhesion. When the amount of the composite metal oxide contained is too large, the amount of the mullite contained is relatively small, such that the insulation properties of the coating layer may be insufficiently improved. More specifically, the composite metal oxide and the mullite may be contained in amounts of 30 to 90 parts by weight and 10 to 70 parts by weight, respectively, with respect to 100 parts by weight of the total amount of the composite metal oxide and the mullite.

The mullite is the only compound that exists stably between silica and alumina, and has a composition of 3Al₂O₃·2SiO₂. The mullite is advantageous for reducing an iron loss by applying coating layer tension because it has a small coefficient of thermal expansion (5 x 10⁻⁶/°C). In addition, the mullite has excellent thermal shock resistance because it has a relatively low modulus of elasticity. In addition, the mullite is also advantageous for imparting insulation properties.

The mullite may have a specific surface area of 5 to 350 m²/g and an average particle diameter of 1 to 300 nm.

When the specific surface area is too small, reactivity may be reduced, which may cause formation of a non-uniform coating layer. When the specific surface area is too large, the viscosity is increased rapidly when mixed with water and stirred, such that the work may not be easily performed. More specifically, the composite metal oxide may have a specific surface area of 50 to 300 m²/g.

When the average particle diameter is too small, the annealing separator composition may not be uniformly applied due to aggregation between the mullites. When the average particle diameter is too large, a surface roughness of the base coating layer may be rough and surface defects may occur. More specifically, the average particle diameter of the mullite may be 10 to 300 nm. In a case where the annealing separator is present in a form of a slurry containing a solvent, a specific surface area and an average particle diameter may be within the ranges described above when measured by removing the solvent at a temperature of 100°C or lower.

The annealing separator composition may further contain other components in addition to the composite metal oxide and the mullite described above.

As an example, the annealing separator composition may further contain a metal hydroxide. The metal hydroxide serves to change surface properties from hydrophobic to hydrophilic through a chemical reaction with a surface of the mullite. Therefore, the metal hydroxide significantly improves dispersibility of the mullite and helps to form a uniform coating layer. In addition, a melting point of the metal hydroxide is lowered, and a temperature at which a coating layer is formed is lowered in the secondary recrystallization-annealing process, such that excellent quality surface properties may be secured. In addition, a coating layer formed in a low-temperature region has an effect of suppressing decomposition of an AIN-based inhibitor, which has a decisive effect on the formation of secondary crystallization, such that excellent quality magnetic properties may be secured.

Specifically, the annealing separator may further contain a metal hydroxide in an amount of 20 wt% or less with respect to 100 wt% of a solid content in the annealing separator. When the amount of the metal hydroxide contained is too large, the metal component diffuses inside to form a film, which may cause formation of a non-uniform coating layer.

In this case, the metal hydroxide may include one or more selected from Ni(OH)₂, Co(OH)₂, Cu(OH)₂, Sr(OH)₂, Ba(OH)₂, Pd(OH)₂, In(OH)₃, Bi(OH)₃, and Sn(OH)₂.

As an example, the annealing separator may further contain MgO. In an exemplary embodiment of the present invention, since Mg may be supplied through MgO in the composite metal oxide, MgO may be contained in a trace amount. MgO may be contained as an unreacted material during a process of preparing the composite metal oxide described above. Specifically, MgO may be contained in the annealing separator in an amount of 5 wt% or less, and more specifically, in an amount of 1 wt% or less, with respect to 100 wt% of a solid content.

The annealing separator composition according to an exemplary embodiment of the present invention may further contain a ceramic powder in an amount of 0.5 to 10 wt% with respect to 100 wt% of the solid content. The ceramic powder may include one or more selected from MnO, Al₂O₃, SiO₂, TiO₂, and ZrO₂. In a case where the ceramic powder is further contained in an appropriate amount, insulation properties of a coating layer to be formed may be further improved.

The annealing separator composition according to an exemplary embodiment of the present invention may further contain Sb₂(SO₄)₃, SrSO₄, BaSO₄, or a combination thereof in an amount of 1 to 10 wt% with respect to 100 wt% of the solid content. By further containing an appropriate amount of Sb₂(SO₄)₃, SrSO₄, BaSO₄, or a combination thereof, a grain-oriented electrical steel sheet having an excellent surface gloss and a significantly aesthetic roughness may be manufactured.

The annealing separator composition may further contain a solvent for uniform dispersion and easy application of solids. As the solvent, water, alcohol, or the like may be used and may be contained in an amount of 300 to 1,000 parts by weight with respect to 100 parts by weight of the solid content. As described above, the annealing separator composition may be a form of a slurry.

### Grain-Oriented Electrical Steel Sheet B

A grain-oriented electrical steel sheet 100 according to an exemplary embodiment of the present invention includes a coating layer 20 disposed on one or both surfaces of a grain-oriented electrical steel sheet substrate 10. FIG. 1 illustrates a schematic side cross-sectional view of a grain-oriented electrical steel sheet according to an exemplary embodiment of the present invention. FIG. 1 illustrates a case where the coating layer 20 is disposed on an upper surface of the grain-oriented electrical steel sheet substrate 10.

In an exemplary embodiment of the present invention, the coating layer 20 contains 15 to 45 wt% of a metal M. These properties are exhibited by containing the composite metal oxide in the annealing separator composition as described above. In a case where MgO is contained rather than a composite metal oxide, the improvement of magnetic properties and insulation properties are not exhibited. Alternatively, in a case where MgO and an oxide of a metal M are contained in the annealing separator as additional compounds rather than a composite metal oxide, the amount of the metal M added is limited, and thus, the above properties are not exhibited. Alternatively, in a case where the amount of the metal M contained in the composite metal oxide is small, the improvement of magnetic properties and insulation properties are not exhibited.

In addition, the coating layer 20 contains mullite. The mullite in the coating layer 20 is derived from the mullite in the annealing separator composition. In a case where the annealing separator contains an aluminum compound such as Al₂O₃ rather than mullite, a temperature of the secondary recrystallization-annealing is relatively lower than a temperature at which mullite is formed, and the aluminum compound is bonded to Si in the steel sheet, and thus, mullite may not be formed in the coating layer 20.

The coating layer may contain 1 to 20 wt% of Mg, 0.5 to 10% or Al, 15 to 45% of a metal M, 15 to 50 wt% of Si, 20% or less of Fe, and a balance of O and unavoidable impurities.

Mg and M are derived from Mg and the metal M in the composite metal oxide.

When the amount of the metal M is too small, the effect of improving the insulation properties of the base coating layer due to the addition of the metal M is not properly obtained. When the amount of the metal M is too large, a manufacturing cost is increased, and sales competitiveness is lowered. In a case where the metal M is two or more elements, the content range described above means the total amount of the two or more elements. More specifically, the amount of the metal M in the coating layer 20 may be 15 to 30 wt%.

The coating layer 20 may contain 0.5 to 10 wt% of Al.. When the content of Al in the coating layer 20 is too low, the iron loss of the grain-oriented electrical steel sheet may be increased. When the content of Al in the coating layer 20 is too high, the corrosion resistance may be deteriorated. Therefore, Al may be contained within the range described above. Al may be derived from the annealing separator composition and the grain-oriented electrical steel sheet substrate 10 described above.

Si and Fe may be derived from the substrate. O may be derived from the components of the annealing separator or may be incorporated during the heat treatment process. In addition, the coating layer 20 may further contain impurity components such as carbon (C) and the like.

The coating layer 20 may contain 5 to 45 area% of mullite. A part of the mullite in the annealing separator may remain and aggregate without being decomposed during the coating layer formation process. These mullites may occupy a predetermined area. In this case, the area is based on a rolled surface (ND surface). Specifically, the coating layer 20 may contain 5 to 40 area% of mullite.

A thickness of the coating layer 20 may be 0.1 to 10 µm. When the thickness of the coating layer is too thin, a coating layer tension imparting ability may be reduced, which may cause an increase in iron loss. When the thickness of the coating layer 20 is too thick, a space factor is reduced, which may cause deterioration of characteristics of the transformer. Therefore, the thickness of the coating layer 20 may be adjusted within the range described above. More specifically, the thickness of the coating layer 20 may be 0.8 to 6 µm.

The grain-oriented electrical steel sheet 100 according to an exemplary embodiment of the present invention may further include a ceramic layer 30 disposed on the coating layer 20. FIG. 1 illustrates an example in which the ceramic layer 30 is further formed on the coating layer 20.

A thickness of the ceramic layer 30 may be 0.5 to 5 µm. When the thickness of the ceramic layer 30 is too thin, an insulating effect of the ceramic layer 30 may be small. When the thickness of the ceramic layer 30 is too thick, adhesion of the ceramic layer 30 is reduced, and peeling may occur. Therefore, the thickness of the ceramic layer 30 may be adjusted within the range described above. More specifically, the thickness of the ceramic layer 30 may be 0.8 to 3.2 µm. In an exemplary embodiment of the present invention, since the insulation properties of the coating layer 20 are enhanced, the thickness of the ceramic layer 30 may be relatively thin.

The ceramic layer 30 may contain a ceramic powder. The ceramic powder may be one or more selected from Al₂O₃, SiO₂, TiO₂, ZrO₂, Al₂O₃·TiO₂, Y₂O₃, 9Al₂O₃·2B₂O₃, BN, CrN, BaTiO₃, SiC, and TiC. A particle diameter of the ceramic powder may be 2 to 900 nm. When the particle diameter of the ceramic powder is too small, it may be difficult to form the ceramic layer. When the particle diameter of the ceramic powder is too large, the surface roughness may be rough, which may cause surface defects. Therefore, the particle diameter of the ceramic powder may be adjusted within the range described above.

The ceramic powder may have one or more shapes selected from the group consisting of a spherical shape, a plate shape, and a needle shape.

The ceramic layer 30 may further contain a metal phosphate. The metal phosphate may include one or more selected from Mg, Ca, Ba, Sr, Zn, Al, and Mn. In the case where the metal phosphate is further contained, the insulation properties of the ceramic layer 30 may be further improved.

The metal phosphate may be composed of a compound obtained by a chemical reaction between a metal hydroxide and phosphoric acid (H₃PO₄).

The metal phosphate is composed of a compound obtained by a chemical reaction between a metal hydroxide and phosphoric acid (H₃PO₄), and the metal hydroxide may be one or more selected from the group consisting of Ca(OH)₂, Al(OH)₃, Mg(OH)₂, B(OH)₃, Co(OH)₂, and Cr(OH)₃.

Specifically, a metal atom of the metal hydroxide may be formed by a substitution reaction with phosphorous of phosphoric acid to form a single bond, a double bond, or a triple bond, and may be composed of a compound in which the amount of unreacted free phosphoric acid (H₃PO₄) is 25 wt% or less.

The metal phosphate may be composed of a compound obtained by a chemical reaction between a metal hydroxide and phosphoric acid (H₃PO₄), and a weight ratio of the metal hydroxide to the phosphoric acid may be represented by 1:100 to 40:100.

When the amount of the metal hydroxide contained is too large, the chemical reaction may not be completed, which may cause generation of precipitates, and when the amount of the metal hydroxide contained is too small, corrosion resistance may be deteriorated. Therefore, a range of the amount of the metal hydroxide may be limited as described above.

In an exemplary embodiment of the present invention, the effects of the annealing separator composition and the coating layer 20 are exhibited regardless of the components of the grain-oriented electrical steel sheet substrate 10. Supplementally, the components of the grain-oriented electrical steel sheet substrate 10 will be described as follows.

The grain-oriented electrical steel sheet substrate 10 may contain 2.8 to 4.5 wt% of silicon (Si), 0.020 to 0.040 wt% of aluminum (Al), 0.01 to 0.20 wt% of manganese (Mn), 0.01 to 0.15 wt% of antimony (Sb), tin (Sn), nickel (Ni), or a combination thereof, and a balance of Fe and other unavoidable impurities.

### Method B for Manufacturing Grain-Oriented Electrical Steel Sheet

FIG. 2 schematically illustrates a flowchart of a method for manufacturing a grain-oriented electrical steel sheet according to an exemplary embodiment of the present invention. The flowchart of the method for manufacturing a grain-oriented electrical steel sheet of FIG. 2 is merely for illustrating the present invention, and the present invention is not limited thereto. Therefore, the method for manufacturing a grain-oriented electrical steel sheet may be variously modified.

As illustrated in FIG. 2, the method for manufacturing a grain-oriented electrical steel sheet includes: preparing a steel slab (S10); heating the steel slab (S20); hot-rolling the heated steel slab to manufacture a hot-rolled sheet (S30); cold-rolling the hot-rolled sheet to manufacture a cold-rolled sheet (S40); performing primary recrystallization-annealing on the cold-rolled sheet (S50); applying an annealing separator onto a surface of the primary recrystallization-annealed steel sheet (S60); and performing secondary recrystallization-annealing on the steel sheet on which the annealing separator is applied (S70). In addition, the method for manufacturing a grain-oriented electrical steel sheet may further include other steps.

First, in S10, a steel slab is prepared. Since components of the steel slab have been specifically described in the components of the grain-oriented electrical steel sheet described above, overlapping descriptions will be omitted.

Next, in S20, the steel slab is heated. At this time, the heating of the slab may be performed by a low-temperature slab method at 1,200°C or lower.

Next, in S30, the heated steel slab is hot-rolled to manufacture a hot-rolled sheet. After S30, the manufactured hot-rolled sheet may be hot-rolled annealed.

Next, in S40, the hot-rolled sheet is cold-rolled to manufacture a cold-rolled sheet. In S40, cold-rolling may be performed once or cold-rolling including intermediate annealing may be performed twice or more.

Next, in S50, primary recrystallization-annealing is performed on the cold-rolled sheet. At this time, the performing of the primary recrystallization-annealing on the cold-rolled sheet may include simultaneously performing decarburization annealing and nitrification annealing on the cold-rolled sheet, or may include performing nitrification annealing on the cold-rolled sheet after decarburization annealing.

Next, in S60, an annealing separator is applied onto a surface of the primary recrystallization-annealed steel sheet. Since the annealing separator has been specifically described, an overlapping description will be omitted.

The amount of the annealing separator applied may be 1 to 20 g/m². When the amount of the annealing separator applied is too small, the formation of the coating layer may not be performed smoothly. When the amount of the annealing separator applied is too large, it may affect the secondary recrystallization. Therefore, the amount of the annealing separator applied may be adjusted within the range described above.

Next, in S70, secondary recrystallization-annealing is performed on the steel sheet on which the annealing separator is applied. A coating layer 20 is formed during the secondary recrystallization-annealing.

In the secondary recrystallization-annealing, a primary soaking temperature may be set to 650 to 750°C, and a secondary soaking temperature may be set to 1,100 to 1,250°C. The temperature may be controlled under a condition of 15 °C/hr in a temperature section of a temperature rising section. In addition, the secondary recrystallization-annealing may be performed in a gas atmosphere that is an atmosphere containing 220 to 30 vol% of nitrogen and 70 to 80 vol% of hydrogen until a primary soaking step, and the steel sheet may be subjected to furnace cooling after being maintained in a 100% hydrogen atmosphere for 15 hours in a secondary soaking step. The coating layer 20 may be smoothly formed through the conditions described above.

The method for manufacturing a grain-oriented electrical steel sheet may further include, after S70, forming a ceramic layer 30. Since the ceramic layer 30 has been also specifically described, an overlapping description will be omitted. As a method for forming the ceramic layer 30, the ceramic layer may be formed by spraying a ceramic powder onto the coating layer 20. Specifically, a method such as plasma spray coating, high velocity oxy fuel spray coating, aerosol deposition coating, or cold spray coating may be applied. More specifically, a plasma spray coating method for forming a ceramic layer by supplying a ceramic powder to a heat source obtained by plasma-generating gas containing Ar, H₂, N₂, or He at an output of 20 to 300 kW may be used. In addition, as a plasma spray coating method, gas containing Ar, H₂, N₂, or He may be supplied in a suspension form of a mixture of a ceramic powder and a solvent to a heat source plasma-generated at an output of 20 to 300 kW to form a ceramic layer 30. In this case, the solvent may be water or alcohol.

In addition, as the method for forming the ceramic layer 30, a method for forming a ceramic layer by applying a composition for forming a ceramic layer that contains a ceramic powder and a metal phosphate may be used.

After the formation of the ceramic layer 30, magnetic domain refinement may be performed.

Hereinafter, the present invention will be described in more detail with reference to Examples. However, these Examples are only for illustrating the present invention, and the present invention is not limited thereto.

### Preparation Example - Preparation of Composite Metal Oxide

MgCl₂ and NiCl₂ were used as a magnesium precursor and a Ni precursor, respectively, a weight of Mg:Ni in the precursors was measured at 50:50, the precursors were added to deionized (DI) water, 0.5 mol of NaOH as a catalyst was added, and stirring was performed for 2 hours. Thereafter, heating and washing were performed. The obtained powder was filtered and dried. A heat treatment was performed in an Ar atmosphere by changing the temperature to 600 to 1,200°C to prepare a composite metal oxide. The average grain diameter, the specific surface area, and the relative dielectric constant according to the heat treatment temperature condition are shown in Table 1.

**[Table 1]**

| Temperature | Average grain diameter (nm) | Specific surface area (m²/g) | Relative dielectric constant |
|---|---|---|---|
| 600°C | 61.33 | 80 | 14 |
| 800°C | 53.70 | 260 | 15 |
| 1000°C | 53.70 | 318 | 15 |
| 1200°C | 33.68 | 420 | 14 |

### Example 1

A slab containing 3.4 wt% of silicon (Si), 0.03 wt% of aluminum (Al), 0.05 wt% of manganese (Mn), 0.04 wt% of antimony (Sb), 0.11 wt% of tin (Sn), 0.06 wt% of carbon (C), 40 parts by ppm of nitrogen (N), and a balance of Fe and other unavoidable impurities was prepared.

The slab was heated at 1,150°C for 220 minutes and then hot-rolled at a thickness of 2.3 mm to manufacture a hot-rolled sheet.

The hot-rolled sheet was heated to 1,120°C and then maintained at 920°C for 95 seconds, and then, the hot-rolled sheet was quenched in water and pickled and then cold-rolled at a thickness of 0.23 mm, thereby manufacturing a cold-rolled sheet.

The cold-rolled sheet was put into a furnace maintained at 850°C, a dew point temperature and an oxidizing ability were controlled, and then, decarburization nitriding and primary recrystallization-annealing were simultaneously performed in a mixed gas atmosphere of hydrogen, nitrogen, and ammonia, thereby manufacturing a decarburized-nitrided and annealed steel sheet.

An annealing separator composition was prepared in a form of a slurry by mixing the components summarized in Table 2 with distilled water, the slurry was applied onto the decarburized-nitrided and annealed steel sheet using a roll, and then, secondary recrystallization-annealing was performed.

In the secondary recrystallization-annealing, a primary soaking temperature was set to 700°C, a secondary soaking temperature was set to 1,200°C, and a temperature was set to 15 °C/hr in a temperature section of a temperature rising section. In addition, the secondary recrystallization-annealing was performed in a mixed gas atmosphere of 50 vol% of nitrogen and 50 vol% of hydrogen up to a temperature of 1,200°C, after the temperature reached 1,200°C, the steel sheet was maintained in a gas atmosphere of 100 vol% of hydrogen for 20 hours, and the steel sheet was subjected to furnace cooling.

The coating layer produced through the secondary recrystallization-annealing was subjected to quantitative analysis using an X-ray diffraction (XRD) method. The results thereof are shown in Table 3.

In addition, a hardness and a Young's modulus in the coating layer were measured. The results thereof are summarized in Table 3. The measurement was performed using an analyzer (Nanoindenter, model name: PI-85, manufactured by Hysitron, Inc.).

In addition, after the formation of the coating layer, insulation properties were measured. The results are summarized in Table 4.

Thereafter, TiO₂ as a ceramic powder was supplied to a heat source obtained by plasma-generating argon (Ar) gas at an output of 250 kW to form a ceramic layer having a thickness of 0.9 µm on a surface of a finally annealed sheet.

Magnetic properties and noise properties of the grains-oriented electrical steel sheets manufactured in Examples and Comparative Examples were evaluated under a condition of 1.7 T and 50 Hz. The results thereof are shown in Table 4.

The magnetic properties of the electrical steel sheet were evaluated using W17/50 and B8. W17/50 means a power loss that occurs when a magnetic field with a frequency of 50 Hz is magnetized to 1.7 Tesla with an alternating current. Here, Tesla is a unit of a magnetic flux density that means a magnetic flux per unit area. B8 represents a density value of a magnetic flux flowing through the electrical steel sheet when a current amount with a magnitude of 800 A/m was applied to a coil wound around the electrical steel sheet.

In addition, the insulation properties were evaluated by measuring the upper portion of the coating using a Franklin measuring instrument according to ASTM A717 international standard.

In addition, the adhesion is represented by the minimum arc diameter without peeling of the coating layer when the specimen is bent 180° in contact with a 10 to 100 mm arc.

**[Table 2]**

| Classification | Annealing separator composition (wt%) | | | |
|---|---|---|---|---|
| | Composite metal powder (balance) | | Ceram ic powder (wt%) | Sb₂(SO₄)₃ (wt%) |
| | Mg (parts by weight) | Metal M (parts by weight) | | |
| Example 1 | 10 | Ni:90 | MnO (0.5) | 1 |
| Example 2 | 20 | Ni:80 | Al2O3 (3) | 10 |
| Example 3 | 30 | Ni:70 | SiO2 (1) | 5 |
| Example 4 | 50 | Ni:50 | TiO2 (0.5) | 5 |
| Example 5 | 10 | Co:90 | ZrO2 (0.5) | 3 |
| Example 6 | 20 | Co:80 | ZrO2 (10) | 3 |
| Example 7 | 30 | Co:70 | ZrO2 (5) | 2 |
| Example 8 | 50 | Co:50 | ZrO2 (5) | 2 |
| Example 9 | 10 | Mn:90 | TiO2 (7) | 7 |
| Example 10 | 20 | Mn:80 | TiO2 (7) | 7 |
| Example 11 | 30 | Mn:70 | TiO2 (10) | 9 |
| Example 12 | 50 | Mn:50 | TiO2 (9) | 2 |
| Example 13 | 30 | Ni:20 Co:20 Mn:30 | MnO (0.9) | 5 |
| Comparative Example 1 | 100 | - | MnO (3) | 5 |
| Comparative Example 2 | 60 | Ni:40 | MnO (5) | 5 |
| Comparative Example 3 | 70 | Co:30 | MnO (10) | 20 |
| Comparative Example 4 | 80 | Mn:20 | MnO (50) | 2 |

**[Table 3]**

| Classification | Content in coating layer (wt%) | | | | | Properties when containing composite metal oxide | |
|---|---|---|---|---|---|---|---|
| | Mg | Metal M | Si | O | Fe | Hardness (GPa) | Modulus (GPa) |
| Example 1 | 3.5 | 31.5 | 19 | 35 | 11 | 8.19 | 92.85 |
| Example 2 | 7 | 28 | 24 | 40 | 1 | 7.64 | 82.15 |
| Example 3 | 10.5 | 24.5 | 23 | 38 | 4 | 9.24 | 103.17 |
| Example 4 | 17.5 | 17.5 | 27 | 34 | 4 | 8.35 | 91.69 |
| Example 5 | 3.5 | 31.5 | 31 | 29 | 5 | 7.10 | 81.98 |
| Example 6 | 7 | 28 | 35 | 25 | 5 | 7.19 | 85.61 |
| Example 7 | 10.5 | 24.5 | 42 | 22 | 1 | 7.16 | 86.30 |
| Example 8 | 17.5 | 17.5 | 18 | 40 | 7 | 6.08 | 71.62 |
| Example 9 | 3.5 | 31.5 | 25 | 32 | 8 | 8.32 | 105.72 |
| Example 10 | 7 | 28 | 25 | 38 | 2 | 6.69 | 76.54 |
| Example 11 | 10.5 | 24.5 | 30 | 29 | 6 | 6.40 | 77.69 |
| Example 12 | 17.5 | 17.5 | 24 | 27 | 14 | 6.29 | 80.26 |
| Example 13 | 10.5 | 4.9, 4.9, 14.7 | 29 | 35 | 1 | 6.00 | 78.76 |
| Comparative Example 1 | 35 | 0 | 23 | 28 | 14 | 5.43 | 66.54 |
| Comparative Example 2 | 21 | 14 | 20 | 31 | 14 | 5.65 | 60.25 |
| Comparative Example 3 | 24.5 | 10.5 | 21 | 35 | 9 | 5.77 | 58.54 |
| Comparative Example 4 | 28 | 7 | 19 | 38 | 8 | 5.14 | 61.66 |

**[Table 4]**

| | Iron loss (W17/50, W/kg) | Magnetic flux density (B8,T) | Insulation after formation of base coating layer (mA) | Adhesion (mmϕ) | Insulation after formation of ceramic layer (mA) |
|---|---|---|---|---|---|
| Example 1 | 0.77 | 1.92 | 715 | 15 | 50 |
| Example 2 | 0.70 | 1.93 | 650 | 15 | 70 |
| Example 3 | 0.65 | 1.94 | 650 | 15 | 60 |
| Example 4 | 0.81 | 1.90 | 770 | 15 | 120 |
| Example 5 | 0.55 | 1.95 | 765 | 15 | 50 |
| Example 6 | 0.62 | 1.91 | 820 | 15 | 114 |
| Example 7 | 0.64 | 1.90 | 810 | 15 | 150 |
| Example 8 | 0.68 | 1.91 | 750 | 15 | 110 |
| Example 9 | 0.65 | 1.91 | 750 | 15 | 95 |
| Example 10 | 0.65 | 1.91 | 640 | 20 | 80 |
| Example 11 | 0.62 | 1.92 | 660 | 20 | 70 |
| Example 12 | 0.64 | 1.92 | 680 | 15 | 80 |
| Example 13 | 0.70 | 1.92 | 770 | 15 | 120 |
| Comparative Example 1 | 0.89 | 1.88 | 990 | 25 | 250 |
| Comparative Example 2 | 0.87 | 1.89 | 950 | 25 | 180 |
| Comparative Example 3 | 0.88 | 1.89 | 947 | 25 | 190 |
| Comparative Example 4 | 0.85 | 1.89 | 925 | 35 | 250 |

As shown in Tables 2 to 4, in the case where a composite metal oxide was appropriately added to the annealing separator, it could be confirmed that the magnetic properties and the insulation properties were improved and the adhesion was excellent. On the other hand, in Comparatives 1 to 4 in which a composite metal oxide was not added or a ratio of Mg to the metal M in the composite metal oxide was not appropriate, it could be confirmed that the magnetic properties and the insulation properties were deteriorated.

### Example 2

A slab containing 3.4 wt% of silicon (Si), 0.03 wt% of aluminum (Al), 0.05 wt% of manganese (Mn), 0.04 wt% of antimony (Sb), 0.11 wt% of tin (Sn), 0.06 wt% of carbon (C), 40 parts by ppm of nitrogen (N), and a balance of Fe and other unavoidable impurities was prepared.

The slab was heated at 1,150°C for 220 minutes and then hot-rolled at a thickness of 2.3 mm to manufacture a hot-rolled sheet.

The hot-rolled sheet was heated to 1,120°C and then maintained at 920°C for 95 seconds, and then, the hot-rolled sheet was quenched in water and pickled and then cold-rolled at a thickness of 0.20 mm, thereby manufacturing a cold-rolled sheet.

The cold-rolled sheet was put into a furnace maintained at 850°C, a dew point temperature and an oxidizing ability were controlled, and then, decarburization nitriding and primary recrystallization-annealing were simultaneously performed in a mixed gas atmosphere of hydrogen, nitrogen, and ammonia, thereby manufacturing a decarburized-nitrided and annealed steel sheet.

An annealing separator composition was prepared in a form of a slurry by mixing the components summarized in Table 5 with distilled water, the slurry was applied onto the decarburized-nitrided and annealed steel sheet using a roll, and then, secondary recrystallization-annealing was performed.

In the secondary recrystallization-annealing, a primary soaking temperature was set to 700°C, a secondary soaking temperature was set to 1,200°C, and a temperature was set to 15 °C/hr in a temperature section of a temperature rising section. In addition, the secondary recrystallization-annealing was performed in a mixed gas atmosphere of 50 vol% of nitrogen and 50 vol% of hydrogen up to a temperature of 1,200°C, after the temperature reached 1,200°C, the steel sheet was maintained in a gas atmosphere of 100 vol% of hydrogen for 20 hours, and the steel sheet was subjected to furnace cooling.

The coating layer produced through the secondary recrystallization-annealing was subjected to quantitative analysis using an X-ray diffraction (XRD) method. The results thereof are shown in Table 6.

In addition, properties of a hardness and a Young's modulus in the coating layer were measured. The results thereof are summarized in Table 6.

In addition, after the formation of the coating layer, insulation properties were measured. The results are summarized in Table 7.

Thereafter, TiO₂ as a ceramic powder was supplied to a heat source obtained by plasma-generating argon (Ar) gas at an output of 250 kW to form a ceramic layer having a thickness of 0.9 µm on a surface of a finally annealed sheet.

Magnetic properties and noise properties of the grains-oriented electrical steel sheets manufactured in Examples and Comparative Examples were evaluated under a condition of 1.7 T and 50 Hz. The results thereof are shown in Table 7.

The magnetic properties of the electrical steel sheet were evaluated using W17/50 and B8. W17/50 means a power loss that occurs when a magnetic field with a frequency of 50 Hz is magnetized to 1.7 Tesla with an alternating current. Here, Tesla is a unit of a magnetic flux density that means a magnetic flux per unit area. B8 represents a density value of a magnetic flux flowing through the electrical steel sheet when a current amount with a magnitude of 800 A/m was applied to a coil wound around the electrical steel sheet.

In addition, the insulation properties were evaluated by measuring the upper portion of the coating using a Franklin measuring instrument according to ASTM A717 international standard.

In addition, the adhesion is represented by the minimum arc diameter without peeling of the coating layer when the specimen is bent 180° in contact with a 10 to 100 mm arc.

**[Table 5]**

| Classification | Annealing separator composition (wt%) | | | | | |
|---|---|---|---|---|---|---|
| | Composite metal powder (balance) | | Mullite | Metal hydroxide | Ceram ic powder | Sb₂(SO₄)₃ |
| | Mg (parts by weight) | Metal M (parts by weight) | | | | |
| Example 14 | 10 | Ni:90 | 70 | Co:0.5 | MnO (1.5) | 5 |
| Example 15 | 20 | Ni:80 | 50 | Cu:5 | Al2O3 (3.5) | 5 |
| Example 16 | 30 | Ni:70 | 30 | Sr:7 | SiO2 (5) | 1 |
| Example 17 | 50 | Ni:50 | 10 | Co:0.5 | TiO2 (3.5) | 2 |
| Example 18 | 10 | Co:90 | 70 | Cu:0.5 | ZrO2 (6) | 2 |
| Example 19 | 20 | Co:80 | 50 | Sr:0.1 | MnO (0.5) | 2 |
| Example 20 | 30 | Co:70 | 30 | Co:1.5 | Al2O3 (3) | 2 |
| Example 21 | 50 | Co:50 | 10 | Cu:1 | SiO2 (1) | 2 |
| Example 22 | 10 | Mn:90 | 70 | Sr:0.7 | TiO2 (0.5) | 1 |
| Example 23 | 20 | Mn:80 | 50 | Co:0.5 | ZrO2 (0.5) | 1 |
| Example 24 | 30 | Mn:70 | 30 | Cu:0.5 | MnO (0.5) | 5 |
| Example 25 | 50 | Mn:50 | 10 | Sr:6 | Al2O3 (3) | 5 |
| | 50 | Ni:15 | 30 | Co:5 | SiO2 (1 | |
| Example 26 | | Co:15 | | | | 5 |
| | | Mn:20 | | | | |
| Com parative Example 5 | 100 | - | 50 | Cu:5 | TiO2 (0.5) | 5 |
| Comparative Example 6 | 60 | Ni:40 | - | Sr:10 | ZrO2 (0.5) | 5 |
| Comparative Example 7 | 70 | Co:30 | - | Cu:5 | TiO2 (0.5) | 5 |
| Comparative Example 8 | 80 | Mn:20 | - | Sr:10 | ZrO2 (0.5) | 5 |

**[Table 6]**

| Classification | Content in coating layer (wt%) | | | | | | Properties when containing composite metal oxide | | Mullite fraction in coating layer |
|---|---|---|---|---|---|---|---|---|---|
| | Mg | Al | Metal M | Si | O | Fe | Hardness (GPa) | Modulus (GPa) | |
| Example 14 | 3.5 | 7 | 28 | 19.5 | 35 | 7 | 11.69 | 112.85 | 34.5 |
| Example 15 | 7.2 | 4.5 | 29 | 25 | 33 | 1.3 | 12.14 | 117.15 | 25.7 |
| Example 16 | 11 | 3 | 25 | 20 | 37 | 4 | 11.74 | 148.17 | 15.2 |
| Example 17 | 15.5 | 1.8 | 17.5 | 27.2 | 34 | 4 | 10.85 | 129.69 | 5.7 |
| Example 18 | 3.8 | 7.7 | 28 | 18 | 33 | 9.5 | 9.1 | 122.98 | 36.2 |
| Example 19 | 7 | 5 | 28 | 24 | 35 | 1 | 12.69 | 119.61 | 25.1 |
| Example 20 | 11 | 3.5 | 23.5 | 22 | 36 | 4 | 11.16 | 115.3 | 14.7 |
| Example 21 | 19 | 1 | 15.5 | 26.5 | 34 | 4 | 10.28 | 108.62 | 4.2 |
| Example 22 | 3.8 | 7.2 | 28 | 19.5 | 35 | 6.5 | 12.32 | 117.72 | 34.5 |
| Example 23 | 7 | 5.9 | 25 | 23.1 | 38 | 1 | 9.59 | 109.54 | 25.2 |
| Example 24 | 10.5 | 3.3 | 24.5 | 23 | 38 | 0.7 | 9.2 | 112.19 | 13 |
| Example 25 | 17.5 | 0.9 | 17.5 | 27 | 33.1 | 4 | 10.79 | 109.06 | 7 |
| Example 26 | 17.5 | 3.5 | Ni;5 Co:5 Mn:7.5 | 25 | 33 | 3.5 | 11 | 95.76 | 15.8 |
| Comparative Example 5 | 33 | 5.8 | 0 | 23.2 | 28 | 10 | 6.93 | 70.54 | 25 |
| Comparative Example 6 | 22 | 0 | 14 | 20 | 31 | 13 | 5.75 | 60.75 | - |
| Comparative Example 7 | 25 | 0 | 10.5 | 21 | 35 | 8.5 | 5.80 | 58.55 | - |
| Comparative Example 8 | 30 | 0 | 7 | 19 | 38 | 6 | 6.14 | 61.70 | - |

**[Table 7]**

| | Iron loss (W17/50, W/kg) | Magnetic flux density (B8,T) | Insulation after formation of base coating layer (mA) | Adhesion (mmϕ) | Insulation after formation of ceramic layer (mA) |
|---|---|---|---|---|---|
| Example 14 | 0.61 | 1.94 | 150 | 15 | 35 |
| Example 15 | 0.58 | 1.94 | 240 | 15 | 40 |
| Example 16 | 0.58 | 1.94 | 300 | 15 | 52 |
| Example 17 | 0.62 | 1.93 | 520 | 15 | 60 |
| Example 18 | 0.66 | 1.95 | 250 | 15 | 27 |
| Example 19 | 0.64 | 1.93 | 370 | 15 | 40 |
| Example 20 | 0.63 | 1.93 | 400 | 20 | 59 |
| Example 21 | 0.55 | 1.91 | 550 | 15 | 68 |
| Example 22 | 0.68 | 1.93 | 101 | 15 | 30 |
| Example 23 | 0.70 | 1.92 | 200 | 20 | 40 |
| Example 24 | 0.71 | 1.93 | 330 | 20 | 50 |
| Example 25 | 0.69 | 1.93 | 495 | 20 | 60 |
| Example 26 | 0.68 | 1.93 | 195 | 20 | 77 |
| Comparative Example 5 | 0.77 | 1.88 | 770 | 25 | 115 |
| Comparative Example 6 | 0.84 | 1.89 | 950 | 25 | 395 |
| Comparative Example 7 | 0.84 | 1.89 | 947 | 35 | 390 |
| Comparative Example 8 | 0.83 | 1.89 | 925 | 35 | 345 |

As shown in Tables 5 to 7, in the case where a composite metal oxide and mullite were appropriately added to the annealing separator, it could be confirmed that the magnetic properties and the insulation properties were improved and the adhesion was excellent. On the other hand, in Comparative Examples 5 to 8 in which a composite metal oxide and mullite were not added, it could be confirmed that the insulation properties were deteriorated.

The present invention is not limited to the exemplary embodiments, but may be manufactured in various different forms, and it will be apparent to those skilled in the art to which the present invention pertains that various modifications and alterations may be made without departing from the technical spirit or essential feature of the present invention. Therefore, it is to be understood that the exemplary embodiments described hereinabove are illustrative rather than being restrictive in all aspects.

### Detailed Description of Main Elements

| | | | |
|---|---|---|---|
| 100: | grain-oriented electrical steel sheet, | 10: | base steel sheet, |
| 20: | coating layer | 30: | ceramic layer |

## Claims

1. An annealing separator composition for a grain-oriented electrical steel sheet, comprising
a composite metal oxide containing Mg and a metal M,
wherein the metal M is one or more of Be, Ca, Ba, Sr, Sn, Mn, Fe, Co, Ni, Cu, and Zn, and
Mg and M are contained in the composite metal oxide in amounts of 5 to 55 parts by weight and 45 to 95 parts by weight, respectively, with respect to 100 parts by weight of the total amount of Mg and M.

2. The annealing separator composition for a grain-oriented electrical steel sheet of claim 1, wherein:
the composite metal oxide has a specific surface area of 30 to 500 m²/g and an average particle diameter of 1 to 500 nm.

3. The annealing separator composition for a grain-oriented electrical steel sheet of claim 1, wherein:
the composite metal oxide has a relative dielectric constant value of 1 to 30.

4. The annealing separator composition for a grain-oriented electrical steel sheet of claim 1, wherein:
M is one or more of Co, Ni, and Mn.

5. The annealing separator composition for a grain-oriented electrical steel sheet of claim 1, wherein:
M has an ion radius of 30 to 100 pm.

6. The annealing separator composition for a grain-oriented electrical steel sheet of claim 1, wherein:
the annealing separator composition has an average grain diameter of 10 to 900 nm after being subjected to a heat treatment at 600°C in a non-oxidizing atmosphere.

7. A grain-oriented electrical steel sheet comprising a coating layer disposed on one or both surfaces of a grain-oriented electrical steel sheet substrate,
wherein the coating layer contains 1 to 20 wt% of Mg, 15 to 45% of a metal M, 15 to 50 wt% of Si, 20% or less of Fe, and a balance of O and unavoidable impurities.

8. The grain-oriented electrical steel sheet of claim 7, further comprising
a ceramic layer disposed on the coating layer.

9. The grain-oriented electrical steel sheet of claim 7, wherein:
a thickness of the coating layer is 0.1 to 10 µm and a thickness of the ceramic layer is 0.5 to 5 µm.

10. A method for manufacturing a grain-oriented electrical steel sheet, the method comprising:
preparing a steel slab;
heating the steel slab;
hot-rolling the heated steel slab to manufacture a hot-rolled sheet;
cold-rolling the hot-rolled sheet to manufacture a cold-rolled sheet;
performing primary recrystallization-annealing on the cold-rolled sheet;
applying an annealing separator onto a surface of the primary recrystallization-annealed steel sheet; and
performing secondary recrystallization-annealing on the steel sheet on which the annealing separator is applied,
wherein the annealing separator contains a composite metal oxide containing Mg and a metal M, the metal M is one or more of Be, Ca, Ba, Sr, Sn, Mn, Fe, Co, Ni, Cu, and Zn, and Mg and M are contained in the composite metal oxide in amounts of 5 to 55 parts by weight and 45 to 95 parts by weight, respectively, with respect to 100 parts by weight of the total amount of Mg and M.

11. An annealing separator composition for a grain-oriented electrical steel sheet, comprising:
a composite metal oxide containing Mg and a metal M; and
mullite,
wherein the metal M is one or more of Be, Ca, Ba, Sr, Sn, Mn, Fe, Co, Ni, Cu, and Zn.

12. The annealing separator composition for a grain-oriented electrical steel sheet of claim 12, wherein:
the composite metal oxide and the mullite are contained in amounts of 10 to 90 parts by weight and 10 to 90 parts by weight, respectively, with respect to 100 parts by weight of the total amount of the composite metal oxide and the mullite.

13. The annealing separator composition for a grain-oriented electrical steel sheet of claim 12, wherein:
the composite metal oxide has a specific surface area of 30 to 500 m²/g and an average particle diameter of 1 to 500 nm, and
the mullite has a specific surface area of 5 to 350 m²/g and an average particle diameter of 1 to 300 nm.

14. The annealing separator composition for a grain-oriented electrical steel sheet of claim 12, wherein:
M is one or more of Co, Ni, and Mn.

15. A grain-oriented electrical steel sheet comprising a coating layer disposed on one or both surfaces of a grain-oriented electrical steel sheet substrate,
wherein the coating layer contains 1 to 20 wt% of Mg, 0.5 to 10% of Al, 15 to 45% of a metal M, 15 to 50 wt% of Si, 20% or less of Fe, and a balance of O and unavoidable impurities, and contains mullite in an amount of 5 to 45 area%.

16. The grain-oriented electrical steel sheet of claim 15, further comprising
a ceramic layer formed on the coating layer.

17. The grain-oriented electrical steel sheet of claim 16, wherein:
a thickness of the coating layer is 0.1 to 10 µm and a thickness of the ceramic layer is 0.5 to 5 µm.

18. A method for manufacturing a grain-oriented electrical steel sheet, the method comprising:
preparing a steel slab;
heating the steel slab;
hot-rolling the heated steel slab to manufacture a hot-rolled sheet;
cold-rolling the hot-rolled sheet to manufacture a cold-rolled sheet;
performing primary recrystallization-annealing on the cold-rolled sheet;
applying an annealing separator onto a surface of the primary recrystallization-annealed steel sheet; and
performing secondary recrystallization-annealing on the steel sheet on which the annealing separator is applied,
wherein the annealing separator contains: a composite metal oxide containing Mg and a metal M; and mullite, and
the metal M is one or more of Be, Ca, Ba, Sr, Sn, Mn, Fe, Co, Ni, Cu, and Zn.
